# NOUVEAU FASCICULE DE BREVET EUROPEEN

(11) **EP 2 374 383 B2**
(45) Date de publication et mention de la décision concernant l'opposition: **06.11.2019**
(45) Mention de la délivrance du brevet: 07.11.2012
(21) Numéro de dépôt: 10159189.9
(22) Date de dépôt: 07.04.2010
(51) Int. Cl.: A47J 31/40, A47J 31/36

(54) **Système d'extraction pour la production d'une boisson utilisant une capsule**
Extraktionssystem für die Herstellung eines Getränks mit Hilfe einer Kapsel
Extraction system for the production of a beverage using a capsule

(43) Date de publication de la demande: 12.10.2011
(73) Titulaire: Société des Produits Nestlé S.A., 1800 Vevey (CH)
(72) Inventeur: Etter, Stefan, 3122 Kehrsatz (CH)
(74) Mandataire: Santarelli

(56) Documents cités:
- EP-A1- 1 849 715
- EP-A1- 1 859 712
- EP-A1- 2 105 074
- EP-A2- 1 894 854
- WO-A2-2008/142663

## Description

La présente invention se rapporte à un système d'extraction pour la production d'une boisson telle que du café comprenant une capsule fonctionnant dans un dispositif adapté.

Un système comprenant un dispositif utilisant des capsules est déjà connu, par exemple, dans la demande WO2005/004683. Dans ce système, la capsule est conçue pour s'insérer dans un logement du dispositif entre deux parties de chambre du module d'extraction. La capsule s'engage dans un moyen de guidage, en particulier deux rails de guidage recevant la collerette de la capsule ; laquelle se positionne dans une position intermédiaire au contact de moyens de retenue, en particulier, des ergots logés dans les rails. La capsule est ensuite prise en charge par l'une au moins des parties de chambre (« la cage d'injection ») qui se déplace linéairement vers l'autre partie de chambre (« la plaque d'extraction ») tout en forçant la capsule vers le bas ; ce qui provoque la déformation de la collerette et fait passer la capsule sous les moyens de retenue (ergots). La capsule est alors positionnée en position d'extraction et enfermée par les deux parties de chambre.

Dans la demande WO2009/043630, le même principe est appliqué. Toutefois, la partie de chambre mobile est associée aux moyens de guidage ; ce qui se provoque l'entraînement de la capsule vers l'autre partie de chambre et son passage en dessous des moyens de retenue (ergots).

Dans le principe de ces demandes, à la réouverture du dispositif, l'une au moins des parties de chambre recule ; la capsule n'étant alors plus supportée par les moyens de retenue (ergots) ; ceci provoque la chute de la capsule par simple gravité et sa collecte dans un bac à capsules.

Un problème provient de ce que la surface d'extraction peut coller contre la plaque d'extraction. Ce phénomène intervient en particulier lorsqu'une capsule est oubliée dans le dispositif en position fermée pendant une période prolongée. Ce problème peut avoir différentes origines par exemple, le durcissement de résidu liquide sur la surface, le ramollissement et l'adhésion du matériau de la surface de la capsule, l'accrochage mécanique de la surface sur les reliefs de la plaque d'extraction, etc. Lorsque ce problème survient, la capsule n'est alors plus éjectée naturellement lors de la réouverture du dispositif (lors du recul de l'une des parties de chambre). Il faut alors pousser la capsule manuellement ou mécaniquement au travers du logement.

La capsule peut aussi se bloquer dans le dispositif et empêcher ou retarder l'utilisation du système avec une autre capsule.

Dans la demande EP1894854, le système comprend une capsule sans moyens d'étanchéité, d'une part, et comprenant des moyens d'injection qui retiennent la capsule par friction dans la partie mobile, d'autre part. Dans la demande EP1859712, le système comprend des moyens d'injection qui retiennent la capsule par friction dans la partie mobile. La présente invention vise donc à résoudre ce problème en améliorant les systèmes de l'art antérieur tout en apportant une solution simple qui rend l'évacuation de la capsule plus fiable. La présente invention se rapporte donc à un système selon la revendication 1 et à un dispositif selon la revendication 12. En particulier, l'invention se rapporte à un système de préparation de boissons à partir d'une capsule contenant une dose d'ingrédients comprenant :
- une capsule contenant des ingrédients, ladite capsule comportant un corps en forme de tronc de cône comprenant une face d'injection et une face d'extraction avec une ouverture du côté le plus large et se terminant par une collerette, une portion de délivrance de la boisson fermant au moins partiellement l'ouverture dudit corps ; la collerette comprenant une portion de base reliée au corps et se terminant par un bord libre, formant, de préférence un renflement ; la collerette de la capsule étant munie d'un moyen d'étanchéité rapporté ou faisant partie intégrante de la collerette et s'étendant éventuellement partiellement sur le côté du corps, le moyen d'étanchéité étant, de préférence en relief ou formant une augmentation d'épaisseur par rapport au reste de la collerette et,
- un dispositif de préparation de boissons comprenant :
   un châssis,
   un moyen de guidage pour permettre l'insertion de la capsule dans le dispositif, en particulier par guidage de sa collerette,
   une première partie de chambre comprenant une cavité de forme adaptée pour recouvrir sensiblement le corps de la capsule, des moyens d'injection de liquide et une surface de serrage qui coopère en engagement avec le moyen d'étanchéité de la collerette,
   une seconde partie de chambre comprenant une plaque d'extraction, de préférence, munie d'orifices pour l'évacuation de la boisson traversant la portion de délivrance du côté de la face d'extraction,
l'une au moins des deux parties de chambres étant mobile par rapport à l'autre partie de chambre d'une position d'ouverture dans laquelle la capsule est insérée à une position de fermeture dans laquelle la capsule est enfermée entre les deux parties de chambre.

Une amélioration selon l'invention consiste en ce que la première partie de chambre comprend des moyens d'accroche de la capsule, autres que les moyens d'injection, permettant d'assurer, lors du passage de la position de fermeture à la position d'ouverture, le maintien de la capsule dans ladite cavité de ladite première partie ; la capsule comprenant des moyens complémentaires adaptés à la prise en charge par ces moyens d'accroche.

Ainsi, le risque que la capsule soit retenue accidentellement contre la plaque d'extraction est éliminé puisque la capsule est maintenue par des moyens d'accroche dans la première partie de chambre. Lors de la réouverture du dispositif, la capsule est alors assurée d'être maintenue en place dans la partie de chambre tout au moins suffisamment pour que la capsule se décolle de la plaque d'extraction.

Selon l'invention, le dispositif comprend aussi des moyens de libération de la capsule qui agissent sur la capsule afin de libérer la capsule hors de la première partie de chambre ; de sorte que la capsule puisse alors tomber par simple gravité. Préférablement, les moyens de libération agissent sur la collerette de la capsule pour lui servir de butée lors du mouvement relatif entre les parties de chambre lors de l'ouverture du dispositif causant ainsi la poussée de la capsule hors de la cavité de la première partie de chambre.

La capsule est adaptée au dispositif et notamment aux moyens d'accroche. Pour cela, la capsule comprend un bord libre, lequel comprend une portion de renflement, formant au moins une partie desdits moyens complémentaires, qui s'agence de manière clipsable dans des moyens d'accroche. Dans ce cas, les moyens d'accroche sont formés par au moins un crochet. Ce crochet est situé sur le bord externe de la première partie de chambre. Il peut dépasser du bord de serrage de ladite première partie de sorte à prendre en charge la collerette de la capsule, préférablement ladite portion de renflement ; laquelle est conçue de manière à dépasser radialement par rapport au bord de serrage.

Préférablement, le renflement du bord libre de la collerette forme un bord sensiblement torique de diamètre prévu pour s'encliqueter dans au moins deux crochets. Les crochets sont préférablement situés de manière distante angulairement de part et d'autre du bord externe de la première partie de chambre. Un décalage angulaire d'au moins deux crochets permet d'assurer une prise en charge de la collerette de la capsule de manière plus fiable. De préférence, les moyens d'accrochage comprennent au moins deux crochets diamétralement opposés ou encore trois crochets distribués sur le pourtour du bord externe de la partie de chambre. Chaque crochet est élastiquement déformable de façon à s'ouvrir sous l'effet de la poussée de la capsule, par exemple, sa collerette à son contact, et se refermer une fois la capsule mise en place dans la cavité de la partie de chambre. En particulier, le crochet comprend une partie de base qui peut fléchir vers l'extérieur lors du passage du renflement de la collerette.

La capsule est conçue pour être retenue par les moyens d'accroche, notamment lesdits crochets. Pour cela, la collerette présente un diamètre sensiblement égal au diamètre interne du logement dudit crochet mais légèrement supérieur au diamètre maximum de la portion de rampe du crochet. Pour cela, la collerette présente un diamètre (D) maximum d'environ 37 mm et d'épaisseur maximum (w) d'environ 0.5 à 2 mm.

Selon une caractéristique de l'invention, d'autres moyens d'accroche sont prévus afin de renforcer la prise en charge de la capsule. Pour cela, les moyens d'accroche comprennent au moins une portion d'arête saillante s'étendant de la surface interne de la cavité vers l'intérieur de celle-ci pour délimiter une section d'ouverture restreinte de cavité. La capsule comprend une portion de paroi tronconique sur le côté du corps, formant l'autre partie desdits moyens complémentaires, pour se déformer sans se rompre au contact de ladite portion d'arête saillante. La portion de paroi tronconique de la capsule forme préférentiellement une portion de section légèrement plus grande que la section d'ouverture restreinte de la cavité par ladite au moins une portion d'arête de façon à pouvoir se déformer sans se rompre lors de la mise en place de la capsule dans ladite cavité. La portion de paroi de la capsule est préférablement déformée lors de son insertion sans se rompre par au moins deux portions d'arêtes distantes entre elles angulairement et s'étendant de la surface interne de la cavité ou encore une portion d'arête continue s'étendant sur tout le pourtour de la cavité.

La portion de paroi tronconique du corps de la capsule est préférablement en matériau déformable tel que de l'aluminium, du plastique ou un matériau à base d'amidon. Préférablement, l'ensemble du corps est formé du même matériau. Toutefois, un renforcement ou une partie plus flexible peuvent être prévus dans cette portion et/ou un changement de matériau afin de favoriser la déformation sans rupture de ladite portion.

D'une manière générale, la portion de paroi tronconique de la capsule a préférentiellement une épaisseur comprise entre 0.1 et 1 mm, de préférence 0.2 et 0.7 mm.

En dehors des portions d'arêtes, la cavité de la partie de chambre est de forme sensiblement tronconique et est préférablement complémentaire de la forme de la capsule mais sensiblement plus large. Plus particulièrement, le corps de la capsule est dimensionné de façon à libérer un interstice entre sa surface et la portion de serrage de ladite première partie sur ladite portion d'appui de la collerette. La portion de serrage comprend aussi des fentes s'étendant radialement et/ou vers l'intérieur de la cavité. Le moyen d'étanchéité est aussi prévu pour se déformer et remplir par compression, sur une ligne périphérique au moins, lesdites fentes afin d'assurer une étanchéité entre la capsule et ladite première partie lors de la fermeture desdites première et deuxième parties autour de la capsule et/ou lors du contact du moyen d'étanchéité avec le liquide injecté.

Le moyen d'étanchéité peut, par exemple, être formé par un anneau en relief fixé sur ou faisant partie intégrante de la portion d'appui du corps de la capsule. Il peut s'agir d'un matériau tel qu'en silicone, caoutchouc, plastique, cellulose, de l'amidon modifié ou toute combinaison de ces matériaux.

Selon un autre aspect de l'invention, il est aussi prévu d'orienter la plaque d'extraction dans la disposition de telle manière à réduire le risque de blocage comme décrit dans la demande co-pendante EP10290148.5. Pour cela, la plaque d'extraction comprend une surface munie d'une série de plusieurs rangées d'éléments en reliefs délimitant plusieurs rangées de canaux ; et de moyens de positionnement de ladite plaque dans le châssis ou une partie de celui-ci ; lesdits moyens de positionnement étant configurés en relation avec des moyens d'indexation de ladite plaque, de manière à orienter ladite plaque de sorte que lesdits canaux soient incliné par rapport à un plan horizontal d'un angle supérieur à 15 degrés, de préférence aux alentours de 45 (+/-10) degrés.

L'invention sera aussi comprise en regard des dessins qui figurent en annexe.
La figure 1 représente une coupe longitudinale schématique du système lorsque la capsule (montrée en transparence) est en position de retenue intermédiaire après son insertion dans le dispositif.
La figure 2 représente une coupe longitudinale du système lorsque le dispositif se referme sur la capsule mais avant fermeture mécanique complète.
La figure 3 montre une coupe longitudinale du système lorsque le dispositif est fermé et la capsule en position d'extraction.
La figure 4 montre une vue élargie en coupe d'une capsule prise en charge par les moyens d'accroche du dispositif.
La figure 5 représente une vue en coupe longitudinale schématique du système lors de la réouverture du dispositif.
La figure 6 représente une vue en coupe longitudinale du système à la réouverture du dispositif provocant l'éjection de la capsule.

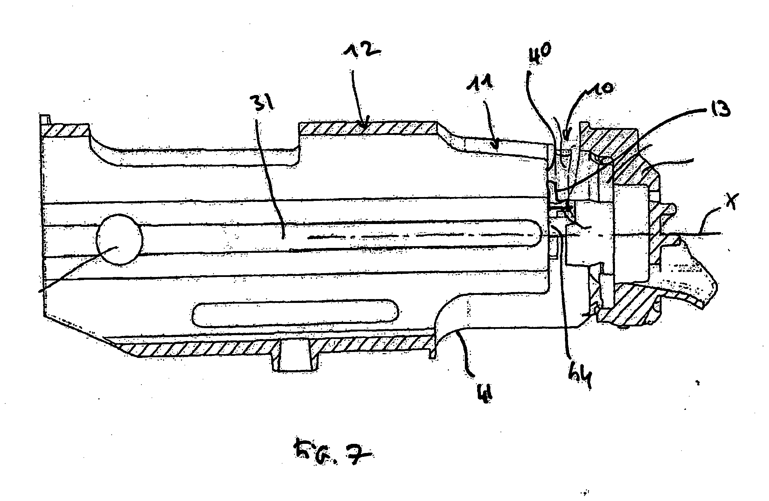

La figure 7 représente une vue en coupe longitudinale du châssis du dispositif.
La figure 8 montre une vue en perspective arrière du piston de la partie de chambre.
La figure 9 montre une vue en perspective avant du piston de la partie de chambre.

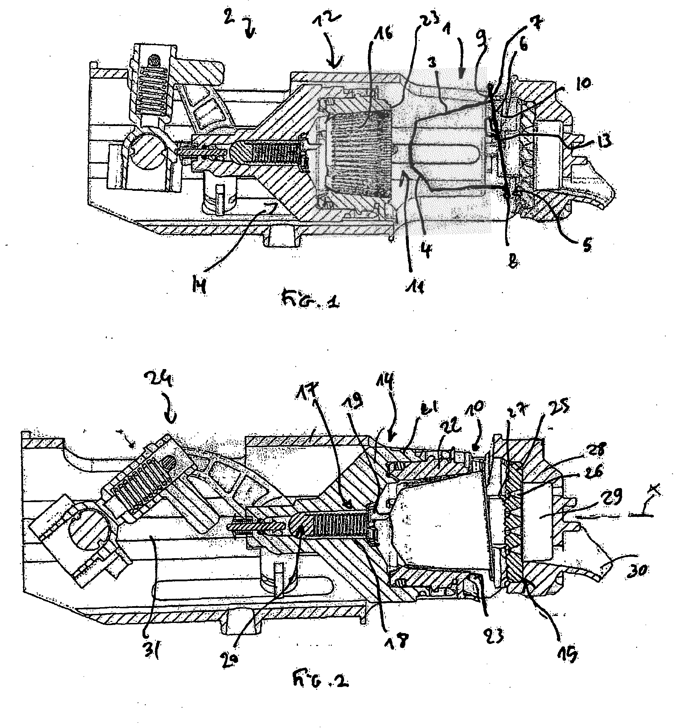

Comme illustré à la figure 1, le système selon l'invention comprend une capsule 1 fonctionnant dans un dispositif de préparation de boisson 2 (montré partiellement).

La capsule comprend un corps 3 en forme de tronc de cône. Le corps est muni, d'un premier côté, d'une face d'injection 4, généralement fermée et perforable ou déjà muni de perforations permettant le passage d'eau au travers de la capsule. Le corps de la capsule se termine, d'un second côté, par une collerette 5 qui s'étend radialement au-delà du corps et sur toute la circonférence de sa base la plus large. De ce côté de la face d'extraction, le corps comprend une ouverture fermée, en partie au moins par une portion ou paroi de délivrance 6. La collerette comprend une portion de base 7 et un bord libre 8, de préférence en forme de renflement. La collerette comprend un moyen d'étanchéité 9 lequel est rapporté sur ou intégré à la portion de base de la collerette. Le moyen d'étanchéité peut être un matériau compressible. Il peut aussi se ramollir au contact du fluide exercé sous pression lors de l'extraction. Ces aspects de compression et ramollissement peuvent se combiner pour réaliser un engagement étanche.

La capsule contient des ingrédients permettant la préparation d'une boisson. En particulier, les ingrédients peuvent être du café moulu, du café soluble, du thé, du cacao, du lait en poudre et toute combinaison possible de ces ingrédients.

Il est à noter que la capsule est dimensionnée et de forme adaptée au dispositif de manière à former un système complémentaire facile et efficace d'utilisation.

De son côté, le dispositif de préparation de boissons comprend un moyen de guidage sous forme de deux rails de guidage 10 placés de part et d'autre de la capsule à une distance permettant le guidage de la collerette 5 de la capsule (à noter que seul un rail 10 peut être représenté sur la coupe de la figure 1). Ce moyen de guidage permet ainsi l'insertion de la capsule dans un logement 11 du châssis 12 du dispositif. La capsule est ainsi retenue dans une position intermédiaire comme montre la figure 1 par des moyens de retenue 13, en particulier des ergots, placés dans les rails à une hauteur telle que la capsule reste placée au dessus de l'axe longitudinal d'extraction comme il sera expliqué plus loin.

Le dispositif comprend, entre le logement 11, une première partie de chambre 14 et une seconde partie de chambre 15 lesquelles sont mobiles relativement entre elles pour se refermer contre la capsule. Il faut noter que seule une partie de chambre peut être mobile et l'autre partie de chambre est fixe ou encore les deux parties peuvent être mobiles. Dans le mode représenté, la première partie de chambre 14 est mobile alors que la seconde partie de chambre 15 est fixe mais cette disposition pourrait être inversée comme décrit dans la demande WO 2009/043630.

Dans l'exemple illustré, la première partie de chambre 14 comprend une cavité 16 de forme sensiblement complémentaire à la forme du corps de la capsule. Cette cavité est donc aussi sensiblement tronconique et s'évase vers son ouverture pour pouvoir prendre en charge la capsule lors de la fermeture du dispositif. La partie de chambre 14 comprend des moyens d'injection de liquide (eau chaude sous pression) 17 comprenant, par exemple, une entrée de liquide 18, des moyens de perforation de la face d'injection de la capsule 19, par exemple des lames, et une valve anti-retour 20. La partie de chambre peut être formée de plusieurs portions de chambre, comme représenté ici, d'une portion de base 21 laquelle se prolonge par une portion de piston 22. Ainsi, la portion de piston est repoussée lors de la fermeture contre la collerette de la capsule par la force hydraulique du liquide lequel agit sur la portion de piston dans la direction de fermeture axiale comme il est décrit dans la demande de brevet EP2068684. La partie de chambre 14, plus exactement, sa portion de piston 22 comprend une surface frontale de serrage 23 qui est destinée à s'appuyer contre le moyen d'étanchéité 9 de la capsule pour assurer un engagement étanche ou quasi-étanche au liquide sous pression. Lors du serrage ou appui, le moyen d'étanchéité est comprimé suffisamment pour compenser des irrégularités de la surface de serrage 23. Comme il est décrit dans la demande EP2068684, la surface de serrage 23 de la première partie de chambre comprend préférentiellement des rainures s'étendant au moins radialement de part et d'autre de la surface frontale de serrage.

Il faut noter que le dispositif comprend aussi un mécanisme d'actionnement 24 en fermeture des parties de chambre, en particulier ici représenté de la première partie. Tout mécanisme est envisageable comme par exemple, un mécanisme à genouillère actionnable par un levier (non représenté) ou encore un mécanisme à came ou à vis.

D'une manière générale, la deuxième partie de chambre 15 comprend une plaque d'extraction 25 munie d'orifices d'évacuation 26 de la boisson. En plus, la plaque peut comprendre des éléments en relief 27 pour permettre l'ouverture, sous l'effet de la pression interne générée dans la capsule, de la portion de délivrance (par exemple, une membrane aluminium ou plastique). Ce principe est décrit dans le brevet EP0512470B1. La plaque d'extraction 25 peut être logée dans un logement d'une portion frontale 28 du châssis. La portion frontale peut aussi comprendre une chambre de collecte 29 se terminant par un conduit ou entonnoir 30 de délivrance de la boisson. Il faut aussi noter que dans un cas de figure possible, la paroi d'extraction est montée dans une portion mobile de la seconde partie de chambre.

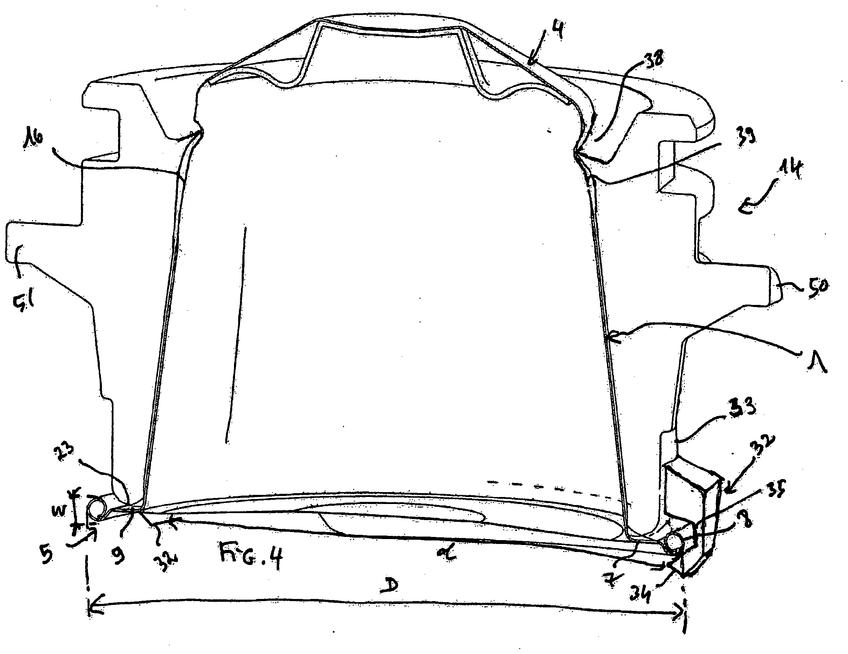

La figure 2 montre le dispositif en cours de fermeture contre la capsule. Pour cela, la première partie de chambre est déplacée au moyen du mécanisme d'actionnement 24 et se déplace sensiblement linéairement en direction de la seconde partie de chambre 15. La première partie de chambre 14 est ainsi guidée en translation au travers de moyens de guidage en translation comprenant, entre autre deux rainures 31 présentes dans le châssis dans lesquelles s'agencent deux nervures ou doigts de guidage latéraux 50, 51 (représentés à la figure 4) de la partie 14. Il faut noter que le déplacement de la partie de chambre dans le châssis n'est pas nécessairement purement linéaire mais peut aussi combiner des déplacements horizontaux et inclinés (par une portion de rampe par exemple) selon la forme particulière donnée aux rainures de guidage 31.

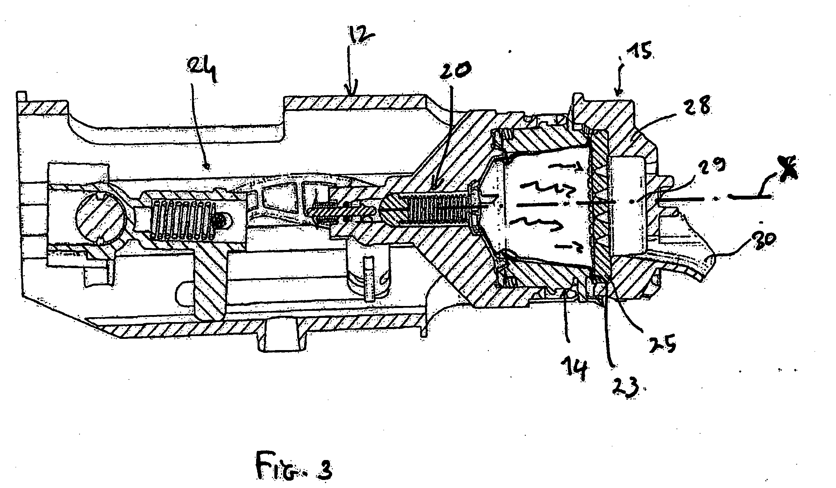

Comme il est décrit dans la demande WO2005/004683, le principe est essentiellement que la première partie de chambre 14 prend en charge la capsule 1 lors de son déplacement relatif par rapport à deuxième partie de chambre 15 et la force à descendre de sa position intermédiaire (figure 1) à une position d'extraction (figure 3). Pour cela, la capsule est maintenue en position intermédiaire (figure 1)(dans une position inclinée en raison de sa forme asymétrique et de son centre de gravité par rapport à sa collerette) au dessus de l'axe « X» représentant l'axe d'extraction lorsque la capsule est enfermée (figure 3). L'axe d'extraction est l'axe médian de la capsule ou encore de la cavité 16 passant par le centre de la paroi d'extraction en fermeture du dispositif. La prise en charge de la capsule se fait par la cavité 16 de la première partie s'engageant autour du corps 3 de la capsule et la forçant à descendre et à se rétablir dans l'axe d'extraction « X ». Lors de la descente de la capsule, la collerette de la capsule se déforme afin de passer sous les moyens de retenue (ergots). Il faut encore noter que le déplacement est relatif et que ce pourrait être la seconde partie qui est mobile entraînant la capsule vers une première partie fixe. Il faut aussi noter que les moyens de retenue pourraient être élastiquement déformable.

Lors du mouvement de fermeture (figure 2 puis figure 3), la partie de chambre 14 s'engage au serrage contre la collerette de la capsule en pinçant celle-ci contre une surface périphérique de la plaque d'extraction 25. Un interstice est créé entre la cavité 16 et la surface du corps de la capsule. Toutefois, lors de l'extraction, le liquide est empêché de fuir au travers du bord de serrage 23 grâce à la présence du moyen d'étanchéité de la capsule : lequel comble, en partie au moins, les irrégularités (rainures) de ladite surface. Ainsi le liquide peut traverser la capsule (et le lit d'ingrédients) depuis les moyens d'injection 20 jusqu'aux orifices localisé dans la plaque d'extraction 25.

Selon un aspect de la présente invention illustré à la figure 4, lors de la fermeture du dispositif, la capsule 1 coopère avec le dispositif 2 de manière à s'engager dans la cavité 16 de la première partie de chambre 14 et y être retenue par des moyens d'accroche lors de la fermeture dans la configuration illustrée à la figure 3. Les moyens d'accroche comprennent au moins un crochet 38 qui s'étend au-delà du bord de serrage 23 et vers l'extérieur de celui-ci. Le crochet s'étend au-delà de la cavité à partir du bord externe 33 de la première partie de chambre (portion de piston 22). La collerette de la capsule comprend un bord libre 8 sous forme d'un renflement lequel s'engage à l'intérieur du crochet 32. Le bord libre 8 s'engage par clipsage dans le crochet 32 lors de la fermeture du dispositif, c'est-à-dire par les forces de serrage exercées par le bord de serrage 23 contre la collerette 5. De préférence, plusieurs crochets sont prévus espacés circonférentiellement sur le pourtour de la cavité. Préférablement, au moins deux crochets sont prévus de façon à maintenir correctement la collerette et éviter un désengagement partiel de la capsule hors de la cavité.

La collerette 5 est dimensionnée pour pouvoir s'insérer parfaitement dans les crochets. Pour cela, la collerette présente un diamètre maximum « D » sensiblement supérieur au diamètre maximal « d » de la portion de rampe 34 du crochet permettant son engagement dans le logement 35 du crochet. L'épaisseur de la collerette est aussi prévue pour s'insérer dans le logement 35. Un diamètre optimal de la collerette est d'environ 37 mm et une épaisseur (w) optimale est d'environ 0.5 à 2 mm. L'épaisseur « w » est ici mesurée axialement, c'est-à-dire perpendiculairement à l'axe diamétral. L'intérieur du logement du crochet est aussi muni d'une surface de rampe permettant le désengagement de la collerette en forçant la portion de base du crochet en flexion vers l'extérieur lors de l'engagement de la collerette par des moyens de butée comme il sera expliqué ci-après.

Dans la position d'engagement de la capsule dans les moyens d'accroche ou crochets 32 (figure 4), le moyen d'étanchéité ou joint 9 n'est pas comprimé suffisamment par la surface23 pour former une étanchéité (c'est-à-dire une compensation par la matière du joint des irrégularités de surface telles que des rainures radiales) de sorte qu'il ne s'exerce pas de forces succion ou autres phénomènes pouvant rendre le désengagement de la capsule difficile.

D'autres moyens d'accroche peuvent être prévus comme des portions d'arêtes saillantes 38 s'étendant de la surface interne de la cavité vers l'intérieur de celle-ci. Ces portions d'arêtes délimitent ainsi une section restreinte ou rétrécie de la cavité 16 forçant le corps de la capsule à se déformer vers l'intérieur comme illustré à la figure 4. Pour cela, la capsule comprend une paroi tronconique 39 de section plus grande au repos et qui se déforme sans se rompre sous l'effet de la pression exercée par les portions d'arêtes 38. Lorsque la capsule est mise en place dans la cavité de la première partie de chambre 14, les flancs 39 de la capsule sont déformés par les arêtes lesquelles s'orientent légèrement en direction de la face d'injection 4, de façon à maintenir agrippée la capsule dans la cavité.

Dans un mode possible, on pourrait prévoir un seul moyen d'accrochage : les crochets 32.

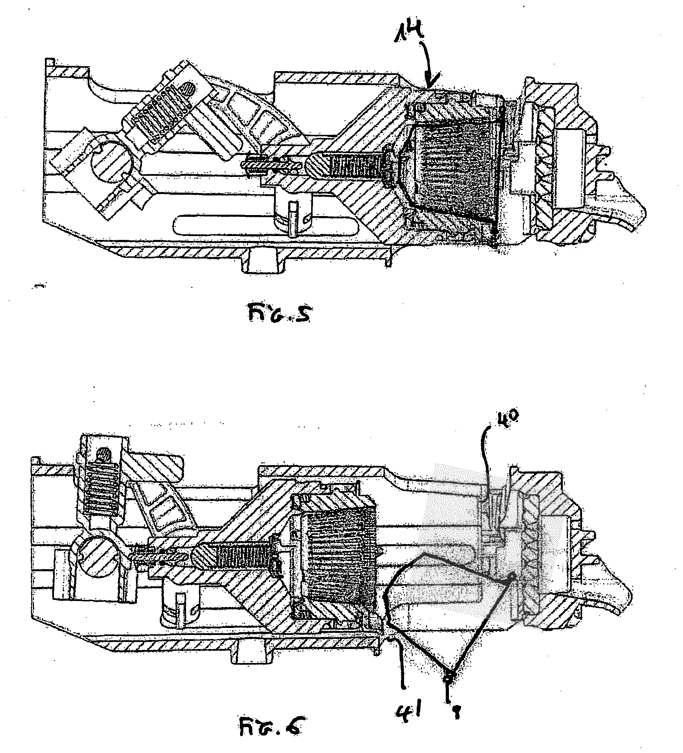

Lorsque le dispositif est ouvert après la fin de l'extraction comme le montre la figure 5, les parties de chambres sont éloignées relativement l'une par rapport à l'autre. Des moyens de libération de la capsule sont prévus pour dégager la capsule de la cavité sous l'effet du mouvement relatif desdites parties. Plus précisément, lorsque la première partie de chambre 14 est reculée ; cela force l'appui de la collerette de la capsule (qui dépasse radialement au delà de la partie de chambre) contre une surface de butée 40 présente dans le châssis. La surface de butée 40 peut comprendre plusieurs portions de surface lesquelles sont dimensionnées et localisées pour entrer en contact avec la portion libre ou renflement 8 de la collerette. Une échancrure latérale 44 est aussi prévue dans le châssis pour permettre le passage des crochets tout en arrêtant la collerette de la capsule.

Comme il est montré aux figures 5 et 6, la capsule est alors désengagée des moyens d'accroche et peut tomber par gravité au travers d'un orifice 41 pratiqué dans le châssis.

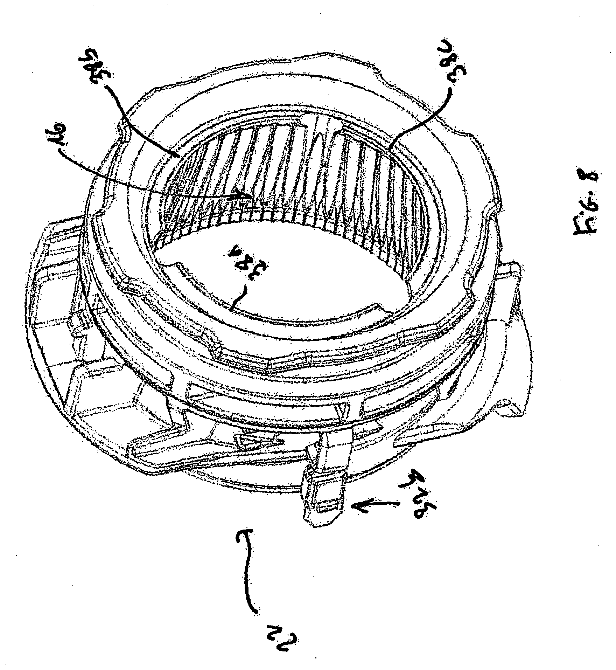

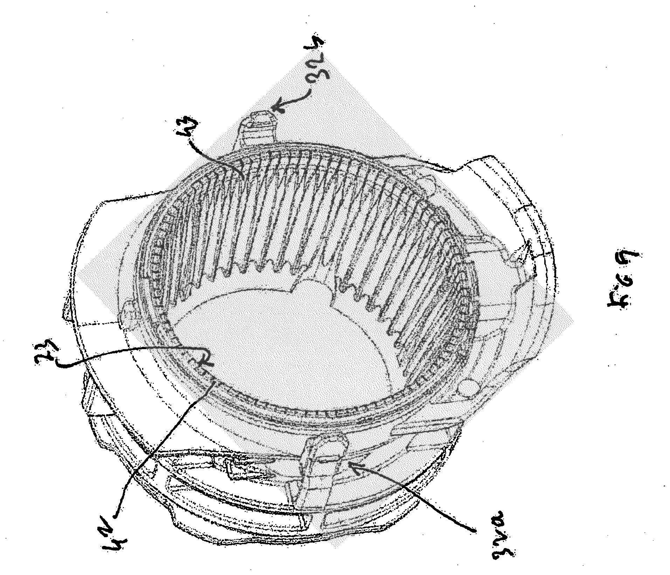

Les figures 8 et 9 montrent des détails de la portion de piston 22 de la première partie de chambre. Notamment, la face interne de la portion 22 (figure 8) comprend plusieurs portions d'arêtes 38a, 38b, 38c distribuées sur le pourtour de la cavité et formant une section restreinte d'ouverture pour la capsule. Deux crochets 32a, 32b sont aussi illustrés lesquels sont mono-matières et monoblocs dans la portion de piston. Les crochets sont élastiquement déformables en raison de la matière les constituant comme du plastique et/ou du métal. On remarque aussi la surface de serrage 23 présente une pluralité de rainures radiales 42 lesquelles sont destinées à coopérer en engagement avec le moyen d'étanchéité de la capsule. Les rainures peuvent s'étendre vers l'intérieur de la cavité formant des rainures 43 de plus grande profondeur.

Bien entendu l'invention peut comprendre de nombreuses variantes.

## Revendications

1. Système de préparation de boissons à partir d'une capsule contenant une dose d'ingrédients comprenant :
une capsule (1) contenant des ingrédients, ladite capsule comportant un corps (3) en forme de tronc de cône comprenant une face d'injection et une face d'extraction avec une ouverture du côté le plus large et se terminant par une collerette (5), une portion de délivrance de la boisson (6) fermant au moins partiellement l'ouverture dudit corps ; la collerette (5) comprenant une portion de base (7) reliée au corps et se terminant par un bord libre (8), formant, de préférence un renflement ; la collerette de la capsule comprenant un moyen d'étanchéité (9) rapporté ou faisant partie intégrante de la collerette et s'étendant éventuellement partiellement sur le côté du corps, le moyen d'étanchéité étant, de préférence en relief ou formant une augmentation d'épaisseur par rapport au reste de la collerette,
un dispositif de préparation de boissons (2) comprenant :
un châssis (12),
un moyen de guidage (10) pour permettre l'insertion de la capsule dans le dispositif,
une première partie de chambre (14) comprenant une cavité (16) de forme adaptée pour recouvrir sensiblement le corps de la capsule, des moyens d'injection de liquide (17) et une surface de serrage (23) qui coopère en engagement avec le moyen d'étanchéité (9) de la collerette,
une seconde partie de chambre (15) comprenant une plaque d'extraction (25),
l'une (14) au moins des deux parties de chambre (14, 15) étant mobile par rapport à l'autre partie de chambre d'une position d'ouverture dans laquelle la capsule (1) est insérée à une position de fermeture dans laquelle la capsule est enfermée entre les deux parties de chambre (14, 15),
la première partie de chambre (14) comprenant des moyens d'accroche (32, 38) de la capsule, autres que les moyens d'injection (17), permettant d'assurer, lors du passage de la position de fermeture à la position d'ouverture, le maintien de la capsule dans ladite cavité (16) de ladite première partie ; la capsule comprenant des moyens complémentaires (8, 39) adaptés à la prise en charge par ces moyens d'accroche (32, 38) **caractérisé en ce que** le dispositif comprend des moyens de libération de la capsule (1) agissant sur la capsule (1) pour libérer la capsule (1) hors de ladite première partie ; la capsule (1) pouvant alors tomber par son propre poids et **en ce que** le bord libre (8) de la capsule (1) comprend une portion de renflement, formant au moins une partie desdits moyens complémentaires, qui s'agence de manière clipsable dans des moyens d'accroche formés par au moins un crochet (32) situé sur le bord externe (33) de la première partie de chambre (14) et dépassant du bord de serrage (23) de ladite première partie (14).

2. Système selon la revendication 1, **Caractérisé en ce que** le renflement du bord libre (8) de la collerette (5) forme un bord sensiblement torique de diamètre prévu pour s'encliqueter dans au moins deux crochets (32) situés de manière distante angulairement de part et d'autre du bord externe (33) de la première partie de chambre (14).

3. Système selon la revendication 2, **Caractérisé en ce que** la collerette (5) présente un diamètre (D) maximum d'environ 37 mm et d'épaisseur maximum (w) d'environ 0.5 à 2 mm.

4. Système selon les revendications 2 ou 3, **Caractérisé en ce que** les moyens d'accrochage (32, 38) comprennent au moins deux crochets (32) diamétralement opposés ou encore trois crochets distribués sur le pourtour du bord externe (33) de la partie de chambre (14).

5. Système selon l'une quelconque des revendications 1 à 4, **Caractérisé en ce que** les moyens d'accroche (32, 38) comprennent au moins une portion d'arête saillante (38) s'étendant de la surface interne de la cavité (16) vers l'intérieur de celle-ci pour délimiter une section d'ouverture restreinte de cavité; la capsule (1) comprenant une portion de paroi tronconique (39) sur le côté du corps, formant l'autre partie desdits moyens complémentaires, pour se déformer sans se rompre au contact de ladite portion d'arête saillante; la portion de paroi tronconique (39) formant une portion de section légèrement plus grande que la section de la cavité restreinte par ladite au moins une arête de façon à se déformer lors de la mise en place de la capsule (1) dans ladite cavité (16).

6. Système selon la revendication 5, **Caractérisé en ce que** la portion de paroi tronconique (39) de la capsule (1) est déformée lors de son insertion sans se rompre par au moins deux portions d'arêtes (38) distantes angulairement et s'étendant de la surface interne de la cavité (16).

7. Système selon l'une quelconque des revendications 5 à 6, **Caractérisé en ce que** la portion de paroi tronconique (38) de la capsule (1) est en matériau déformable tel que de l'aluminium, du plastique ou un matériau à base d'amidon.

8. Système selon la revendication 7, **Caractérisé en ce que** la portion de capsule (1) a une épaisseur comprise entre 0.2 et 1 mm, de préférence 0.3 et 0.7 mm.

9. Système selon l'une quelconque des revendications précédentes, **Caractérisé en ce que** la cavité (16) est de forme sensiblement tronconique complémentaire de la forme de la capsule (1) mais sensiblement plus large ; le corps de la capsule (1) étant dimensionné de façon à libérer un interstice entre sa surface et la surface de la cavité d'environ 2 à 10 mm au maximum.

10. Système selon l'une quelconque des revendications précédentes, **Caractérisé en ce que** la portion de serrage de ladite première partie (14) sur la collerette (5) comprend des fentes s'étendant radialement et/ou vers l'intérieur de la cavité (16); et recouvre en partie au moins le moyen d'étanchéité (9); lequel est prévu pour se déformer et remplir par compression, sur une ligne périphérique au moins, les desdites fentes afin d'assurer une étanchéité entre la capsule (1) et ladite première partie (14) lors de la fermeture desdites première (14) et deuxième (15) parties autour de la capsule et/ou lors du contact du moyen d'étanchéité (9) avec le liquide injecté.

11. Système selon la revendication 10, **Caractérisé en ce que** le moyen d'étanchéité (9) est formé par un anneau en relief fixé sur ou faisant partie intégrante de la portion d'appui du corps de la capsule (1).

12. Dispositif de préparation de boissons à partir d'une capsule contenant une dose d'ingrédients comprenant :
un dispositif de préparation de boissons (2) comprenant :
un châssis (12),
un moyen de guidage (10) pour permettre l'insertion de la capsule (1) dans le dispositif (2),
une première partie de chambre (14) comprenant une cavité (16) de forme adaptée pour recouvrir sensiblement le corps de la capsule (1),
une seconde partie de chambre (15) comprenant une plaque d'extraction (25) munie d'orifices pour l'évacuation de la boisson traversant la portion de délivrance du côté de la face d'extraction,
l'une au moins des deux parties de chambres (14, 15) étant mobile par rapport à l'autre partie de chambre d'une position d'ouverture dans laquelle la capsule est insérée à une position de fermeture dans laquelle la capsule est enfermée entre les deux parties de chambre,
la première partie de chambre (14) comprenant des moyens d'accroche (32, 38) de la capsule, autres que les moyens d'injection (17), permettant d'assurer, lors du passage de la position de fermeture à la position d'ouverture, le maintien de la capsule (1) dans ladite cavité (16) de ladite première partie (14) ; la capsule comprenant des moyens complémentaires (8, 39) adaptés à la prise en charge par ces moyens d'accroche (32, 38) et **caractérisé en ce que** le dispositif (2) comprend des moyens de libération de la capsule (1) agissant sur la capsule (1) pour libérer la capsule (1) hors de ladite première partie (14); la capsule (1) pouvant alors tomber par son propre poids et **en ce que** les moyens d'accroche sont formés par au moins un crochet (32) situé sur le bord externe (33) de la première partie de chambre (14) et dépassant du bord de serrage (23) de ladite première partie (14) afin de permettre l'agencement d'un bord libre (8) de la capsule (1) comprenant une portion de renflement, formant au moins une partie desdits moyens complémentaires (8, 39), qui s'agence de manière clipsable dans lesdits moyens d'accroche (32).

## Patentansprüche

1. System zur Herstellung von Getränken aus einer Kapsel, die eine Dosis von Inhaltsstoffen enthält, umfassend:
eine Kapsel (1), die Inhaltsstoffe enthält, wobei die Kapsel einen kegelstumpfförmigen Körper (3) aufweist, der eine Einspritzfläche und eine Extraktionsfläche mit einer Öffnung an der breitesten Seite aufweist und in einem Flansch endet (5), wobei ein Abschnitt zur Ausgabe des Getränks (6) die Öffnung des Körpers mindestens teilweise verschließt; wobei der Flansch (5) einen Basisabschnitt (7) aufweist, der mit dem Körper verbunden ist und in einer freien Kante (8) endet, die vorzugsweise eine Verstärkung bildet; wobei der Flansch der Kapsel ein Dichtungsmittel (9) aufweist, das an dem Flansch angebracht oder mit diesem integral verbunden ist und sich möglicherweise teilweise zur Seite des Körpers erstreckt, wobei das Dichtungsmittel vorzugsweise in Relief ist oder eine Zunahme der Dicke im Vergleich zum Rest des Flansches bildet,
eine Vorrichtung zur Herstellung von Getränken (2), umfassend:
einen Rahmen (12),
ein Führungsmittel (10) zum Einführen der Kapsel in die Vorrichtung,
einen ersten Kammerabschnitt (14), umfassend einen Hohlraum (16), der so geformt ist, dass er den Körper der Kapsel im Wesentlichen bedeckt, Mittel zum Einspritzen von Flüssigkeit (17) und eine Klemmfläche (23), die in Eingriff mit dem Dichtungsmittel (9) des Flansches zusammenwirkt,
einen zweiten Kammerabschnitt (15) mit einer Extraktionsplatte (25),
wobei mindestens einer (14) der beiden Kammerabschnitte (14, 15) in Bezug zu dem anderen Kammerabschnitt beweglich ist zwischen einer geöffneten Position, in der die Kapsel (1) eingeführt wird, und einer geschlossenen Position, in der die Kapsel zwischen den beiden Kammerabschnitten (14, 15) eingeschlossen ist, wobei der erste Kammerabschnitt (14) Mittel zum Greifen (32, 38) der Kapsel umfasst, die sich von den Einspritzmitteln (17) unterscheiden, wodurch gewährleistet werden kann, dass während des Übergangs von der geschlossenen Position in die geöffnete Position die Kapsel in dem Hohlraum (16) des ersten Abschnitts verbleibt; wobei die Kapsel komplementäre Mittel (8, 39) aufweist, die für eine Aufnahme durch die Greifmittel (32, 38) geeignet sind, **dadurch gekennzeichnet, dass** die Vorrichtung Mittel zum Freigeben der Kapsel (1) aufweist, die auf die Kapsel (1) einwirken, um die Kapsel (1) aus dem ersten Abschnitt freizugeben; wobei die Kapsel (1) dann durch ihr eigenes Gewicht fallen kann, und **dadurch, dass** die freie Kante (8) der Kapsel (1) einen verstärkten Abschnitt aufweist, der mindestens einen Abschnitt der komplementären Mittel bildet, der so angeordnet ist, dass er in den Greifmittel einschnappen kann, die durch mindestens einen Haken (32) gebildet werden, der an der äußeren Kante (33) des ersten Kammerabschnitts (14) angeordnet ist und von der Klemmkante (23) des ersten Abschnitts (14) vorsteht.

2. System nach Anspruch 1, **dadurch gekennzeichnet, dass** die Verstärkung der freien Kante (8) des Flansches (5) eine im Wesentlichen wulstförmige Kante mit einem Durchmesser bildet, der so dafür ausgelegt ist, dass sie in mindestens zwei Haken (32) einrastet, die in einem Winkelabstand auf beiden Seiten der äußeren Kante (33) des ersten Kammerabschnitts (14) angeordnet sind.

3. System nach Anspruch 2, **dadurch gekennzeichnet, dass** der Flansch (5) einen maximalen Durchmesser (D) von etwa 37 mm und eine maximale Dicke (w) von etwa 0,5 bis 2 mm aufweist.

4. System nach Anspruch 2 oder 3, **dadurch gekennzeichnet, dass** die Greifmittel (32, 38) mindestens zwei diametral gegenüberliegende Haken (32) oder drei Haken umfassen, die um den Umfang der äußeren Kante (33) des Kammerabschnitts (14) verteilt sind.

5. System nach einem der Ansprüche 1 bis 4, **dadurch gekennzeichnet, dass** die Greifmittel (32, 38) mindestens einen vorstehenden Gratabschnitt (38) umfassen, der sich von der Innenfläche des Hohlraums (16) in das Innere desselben erstreckt, so dass er einen beschränkten Öffnungsabschnitt des Hohlraums begrenzt; wobei die Kapsel (1) einen kegelstumpfförmigen Wandabschnitt (39) auf der Seite des Körpers aufweist, der den anderen Abschnitt der komplementären Mittel bildet, um sich bei Kontakt mit dem vorstehenden Gratabschnitt zu verformen, ohne zu brechen; wobei der kegelstumpfförmige Wandabschnitt (39) einen Querschnittsabschnitt bildet, der geringfügig größer als der Querschnitt des Hohlraums ist, der durch die mindestens eine Kante beschränkt wird, so dass er sich beim Platzieren der Kapsel (1) in dem Hohlraum (16) verformt.

6. System nach Anspruch 5, **dadurch gekennzeichnet, dass** der kegelstumpfförmige Wandabschnitt (39) der Kapsel (1) beim Einsetzen durch mindestens zwei Gratabschnitte (38), die winkelmäßig beabstandet sind und sich von der Innenfläche des Hohlraums (16) erstrecken, verformt wird, ohne zu brechen.

7. System nach einem der Ansprüche 5 bis 6, **dadurch gekennzeichnet, dass** der kegelstumpfförmige Wandabschnitt (38) der Kapsel (1) aus verformbarem Material wie Aluminium, Kunststoff oder einem Material auf Basis von Stärke besteht.

8. System nach Anspruch 7, **dadurch gekennzeichnet, dass** der Abschnitt der Kapsel (1) eine Dicke zwischen 0,2 und 1 mm, vorzugsweise 0,3 und 0,7 mm hat.

9. System nach einem der vorstehenden Ansprüche, **dadurch gekennzeichnet, dass** der Hohlraum (16) im Wesentlichen kegelstumpfförmig, komplementär zur Form der Kapsel (1), doch im Wesentlichen breiter ist; wobei der Körper der Kapsel (1) so bemessen ist, dass ein Spalt zwischen seiner Oberfläche und der Oberfläche des Hohlraums von höchstens etwa 2 bis 10 mm frei bleibt.

10. System nach einem der vorstehenden Ansprüche, **dadurch gekennzeichnet, dass** der Klemmabschnitt des ersten Abschnitts (14) am Flansch (5) Schlitze aufweist, die sich radial und/oder zum Inneren des Hohlraums (16) erstrecken; und das Dichtungsmittel (9) mindestens teilweise bedeckt; das dafür vorgesehen ist, sich zu verformen und die Schlitze durch Kompression auf mindestens einer Umfangslinie zu füllen, um eine Abdichtung zwischen der Kapsel (1) und dem ersten Abschnitt (14) beim Schließen des ersten (14) und zweiten (15) Abschnitts um die Kapsel und/oder bei Kontakt des Dichtungsmittels (9) mit der eingespritzten Flüssigkeit zu gewährleisten.

11. System nach Anspruch 10, **dadurch gekennzeichnet, dass** das Dichtungsmittel (9) durch einen Ring in Relief gebildet wird, der an dem Auflagerabschnitt des Körpers der Kapsel (1) befestigt oder integral damit verbunden ist.

12. Vorrichtung zur Herstellung von Getränken aus einer Kapsel, die eine Dosis von Inhaltsstoffen enthält, umfassend:
eine Vorrichtung zur Herstellung von Getränken (2), umfassend:
einen Rahmen (12),
ein Führungsmittel (10) zum Einführen der Kapsel (1) in die Vorrichtung (2),
einen ersten Kammerabschnitt (14), umfassend einen Hohlraum (16), der so geformt ist, dass er den Körper der Kapsel (1) im Wesentlichen bedeckt,
einen zweiten Kammerabschnitt (15) mit einer Extraktionsplatte (25), die mit Öffnungen zum Ablassen des Getränks versehen ist, das den Ausgabeabschnitt auf der Extraktionsflächenseite durchläuft,
wobei mindestens einer der beiden Kammerabschnitte (14, 15) in Bezug zu dem anderen Kammerabschnitt beweglich ist zwischen einer geöffneten Position, in der die Kapsel eingeführt wird, und einer geschlossenen Position, in der die Kapsel zwischen den beiden Kammerabschnitten eingeschlossen ist,
wobei der erste Kammerabschnitt (14) Mittel zum Greifen (32, 38) der Kapsel umfasst, die sich von den Einspritzmitteln (17) unterscheiden, wodurch gewährleistet werden kann, dass während des Übergangs von der geschlossenen Position in die geöffnete Position die Kapsel (1) in dem Hohlraum (16) des ersten Abschnitts (14) verbleibt; wobei die Kapsel komplementäre Mittel (8, 39) aufweist, die für eine Aufnahme durch die Greifmittel (32, 38) geeignet sind, **dadurch gekennzeichnet, dass** die Vorrichtung (2) Mittel zum Freigeben der Kapsel (1) aufweist, die auf die Kapsel (1) einwirken, um die Kapsel (1) aus dem ersten Abschnitt (14) freizugeben; wobei die Kapsel (1) dann durch ihr eigenes Gewicht fallen kann, und dass die Greifmittel durch mindestens einen Haken (32) gebildet werden, der an der äußeren Kante (33) des ersten Kammerabschnitts (14) angeordnet ist und von der Klemmkante (23) des ersten Abschnitts (14) vorsteht, um die Anordnung einer freien Kante (8) der Kapsel (1) zu ermöglichen, die einen verstärkten Abschnitt aufweist, der mindestens einen Abschnitt der komplementären Mittel (8, 39) bildet, der so angeordnet ist, dass er in die Greifmittel (32) einschnappen kann.

## Claims

1. A system for preparing drinks from a capsule containing a dose of ingredients, comprising:
a capsule (1) containing ingredients, said capsule comprising a body (3) in the shape of a truncated cone comprising an injection face and an extraction face, with an opening on the widest side, and terminating in a collar (5), a drink delivery portion (6) at least partially closing the opening of said body; the collar (5) comprising a base portion (7) linked to the body and terminating in a free edge (8) preferentially forming a bulge; the collar of the capsule comprising a sealing means (9) attached to or forming an integral part of the collar, and potentially extending partially onto the side of the body, the sealing means preferentially being raised or forming an increased thickness relative to the rest of the collar,
a drink preparation device (2) comprising:
a chassis (12),
a guiding means (10) to enable the insertion of the capsule into the device,
a first chamber part (14) comprising a cavity (16) of a shape adapted to substantially cover the body of the capsule, liquid injection means (17), and a tightening surface (23) that mates with the sealing means (9) of the collar,
a second chamber part (15) comprising an extraction plate (25),
at least one (14) of the two chamber parts (14, 15) being movable relative to the other chamber part from an open position in which the capsule (1) is inserted to a closed position in which the capsule is enclosed between the two chamber parts (14, 15), the first chamber part (14) comprising means for hooking (32, 38) the capsule, other than the injection means (17), making it possible to ensure, when switching from the closed position to the open position, that the capsule remains in said cavity (16) of said first part; the capsule comprising complementary means (8, 39) suited for engagement by those means for hooking (32, 38) **characterized in that** the device comprises means for releasing the capsule (1) acting on the capsule (1) to release the capsule (1) from said first part; the capsule (1) then being able to fall under its own weight, and **in that** the free edge (8) of the capsule (1) comprises a bulging portion, forming at least part of said complementary means, which accommodates in a clippable manner into the means for hooking formed by at least one hook (32) located on the outer edge (33) of the first chamber part (14) and extending beyond the tightening edge (23) of said first part (14).

2. A system according to claim 1, **characterized in that** the bulge of the free edge (8) of the collar (5) forms a substantially toroidal edge whose diameter is suited to snap into at least two hooks (32) located angularly separate on both sides of the outer edge (33) of the first chamber part (14).

3. A system according to claim 2, **characterized in that** the collar (5) has a diameter (D) no larger than about 37 mm and a thickness (w) no larger than about 0.5 to 2 mm.

4. A system according to claims 2 or 3, **characterized in that** the means for hooking (32, 38) comprise at least two hooks (32) diametrically opposite one another, or three hooks distributed along the perimeter of the outer edge (33) of the chamber part (14).

5. A system according to any one of the claims 1 to 4, **characterized in that** the means for hooking (32, 38) comprise at least one protruding edge portion (38) extending from the inner surface of the cavity (16) to the interior thereof to delimit a restricted opening section of the cavity; the capsule (1) comprising a frustoconical wall portion (39) on the side of the body, forming the other part of said complementary means, in order to deform without breaking contact with said protruding edge portion; the frustoconical wall portion (39) forming a cross-section portion slightly larger than the cavity section restricted by said at least one edge, so as to deform when the capsule (1) is placed in said cavity (16).

6. A system according to claim 5, **characterized in that** the frustoconical wall portion (39) of the capsule (1) is deformed when inserted without breaking by at least two edge portions (38) angularly separated from one another and extending from the inner surface of the cavity (16).

7. A system according to any one of the claims 5 to 6, **characterized in that** the frustoconical wall portion (38) of the capsule (1) is made of a deformable material such as aluminum, plastic, or a starch-based material.

8. A system according to claim 7, **characterized in that** the capsule portion (1) has a thickness of between 0.2 and 1 mm and, preferably between 0.3 and 0.7 mm.

9. A system according to any one of the preceding claims, **characterized in that** the cavity (16) is of a substantially frustoconical shape complementary to the shape of the capsule (1) but substantially wider; the body of the capsule (1) being sized so as to leave a space between its surface and the surface of the cavity that is no more than about 2 to 10 mm.

10. A system according to any one of the preceding claims, **characterized in that** the tightening portion of said first part (14) on the collar (5) comprises slots that extend radially and/or towards the interior of the cavity (16); and at least partially covers the sealing means (9); which is provided to deform and fill by compression, at least one a peripheral line, said slots in order to ensure sealing between the capsule (1) and said first part (14) when said first (14) and second (15) parts are closed around the capsule and/or when the seal means (9) comes into contact with the injected liquid.

11. A system according to claim 10, **characterized in that** the sealing means (9) is formed by a raised ring attached to or forming an integral part of the support portion of the body of the capsule (1).

12. A device for preparing drinks from a capsule containing a dose of ingredients, comprising:
a drink preparation device (2) comprising:
a chassis (12),
a guiding means (10) to enable the insertion of the capsule (1) into the device (2),
a first chamber part (14) comprising a cavity (16) of a shape adapted to substantially cover the body of the capsule (1),
a second chamber part (15) comprising an extraction plate (25) equipped with orifices to discharge the drink passing through the delivery portion on the side of the extraction face,
at least one of the two chamber parts (14, 15) being movable relative to the other chamber part, from an open position in which the capsule is inserted, to a closed position in which the capsule is enclosed between the two chamber parts,
the first chamber part (14) comprising means for hooking (32, 38) the capsule, other than the injection means (17), making it possible to ensure, when switching from the closed position to the open position, that the capsule (1) is kept in said cavity (16) of said first part (14); the capsule comprising complementary means (8, 39) suited for engagement by those means for hooking (32, 38) and **characterized in that** the device (2) comprises means for releasing the capsule (1) acting on the capsule (1) to release the capsule (1) from said first part (14); the capsule (1) then being able to fall under its own weight, and **in that** the means for hooking are formed by at least one hook (32) located on the outer edge (33) of the first chamber part (14) and exceeding the tightening edge (23) of said first part (14) so as to allow the fitting of a free edge (8) of the capsule (1) comprising a bulging portion, forming at least part of said complementary means (8, 39) that accommodates in a clippable manner into said means for hooking (32).
